# FASCICULE DE BREVET EUROPEEN

(11) **EP 2 691 219 B1**
(45) Date de publication et mention de la délivrance du brevet: **16.05.2018**
(21) Numéro de dépôt: 12710970.0
(22) Date de dépôt: 29.03.2012
(51) Int. Cl.: B29B 17/04, B29B 17/02, B29L 22/02, B29K 283/00

(54) **PROCEDE DE TRAITEMENT DE TEXTILES TECHNIQUES**
VERFAHREN ZUR BEHANDLUNG VON TECHNISCHEN TEXTILIEN
METHOD FOR TREATING TECHNICAL TEXTILES

(30) Priorité: 31.03.2011 FR 1152702
(43) Date de publication de la demande: 05.02.2014
(73) Titulaire: RHODIA OPERATIONS, 93306 Aubervilliers (FR)
(72) Inventeur: BASIRE, Charlotte, F-69970 Marennes (FR)
(74) Mandataire: Schuck, Alexander
(86) Numéro de dépôt international: PCT/EP2012/055652
(87) Numéro de publication internationale: WO 2012/130949

(56) Documents cités:
- EP-A2- 0 950 684
- WO-A1-2008/032052
- FR-A1- 2 856 625
- US-A- 2 695 425

## Description

La présente invention concerne un procédé de traitement de textiles techniques à base de fibres thermoplastiques et comprenant un revêtement, tel que notamment de coussins gonflables de sécurité, utilisant le principe de la décantation centrifuge pour séparer les résidus de fibres et le matériau de revêtement. La particularité de cette invention repose sur la préparation du tissu dépourvu de revêtement, conduisant ainsi à des formulations aux performances mécaniques élevées.

### ART ANTERIEUR

Les textiles techniques sont des articles généralement tricotés, tissés ou non-tissés constitués de fibres thermoplastiques pour des applications particulières telles que l'ignifugation, les résistances mécaniques, la conductivité électrique et/ou thermique ou la protection des personnes par exemple. Ils sont généralement traités en surface par un revêtement par exemple appliqué par enduction.

Comme exemple de textiles techniques revêtus on peut citer les coussins gonflables de sécurité, appelés couramment airbag ou air-bag, qui sont des sacs de protection gonflables utilisés pour la protection des occupants d'un véhicule dans lesquels un gaz est très rapidement injecté par une réaction chimique explosive, pour les gonfler et ainsi amortir les chocs. Connectés à des capteurs de détection des chocs et disposés devant le capot et à la base du pare-brise, ils se gonflent et limitent les risques de blessures graves lors d'un d'impact avec un piéton ou véhicule. Ces articles comprennent généralement un sac à base de polyamide ou de polyester, généralement sous forme de tissés de fibres, sur plusieurs couches, et un revêtement de silicone sur une des faces. Les air-bags sont très majoritairement fabriqués par dépôt d'une composition silicone réticulable pour former une couche mince d'élastomère silicone.

Il se pose le problème du recyclage de ces textiles techniques tels que les coussins gonflables de sécurité enduits, du à la non compatibilité des fibres thermoplastiques et des polymères servant au revêtement, comme le silicone. En effet, il est très difficile de dissocier mécaniquement les deux matières. Leur réutilisation directe sans traitement au préalable conduit à des performances dégradées du fait de la présence de revêtement qui altère également l'aspect de surface des pièces moulées et conduisent souvent à un fort encrassement des moules durant l'injection.

A ce titre, il est connu de la demande de brevet japonais JP2003191239, de couper des air-bags à base de polyamide en morceaux et de les extruder pour former des granulés prêt à être utilisés pour la fabrication d'articles moulés. Toutefois, ces articles obtenus à partir de matière polyamide usagé ne présentent pas de propriétés mécaniques satisfaisantes. Sont décrits dans la littérature des procédés permettant d'incorporer des déchets textiles de polyamide dans une résine vierge tel que dans le document JP2004018614 pour produire un polyamide régénéré de performances équivalentes à celles d'un matériau « neuf ». Les résidus de polyamide peuvent être issus de coussins gonflables de sécurité. Aucune notification de la présence de silicone n'est mentionnée, ni de taille des résidus. Dans la demande JP2003119330 est décrit un procédé de recyclage de coussins gonflables de sécurité avec un copolymère éthylène/oléfine greffé par de l'acide maléïque par mélange à l'état fondu. Aucune notification de la présence de silicone, ni de taille des résidus, ni d'échelle de dispersion n'est mentionné.

Il est par ailleurs bien connu de tenter de séparer la matière polyamide de la matière silicone. Le brevet EP0950684 décrit un procédé pour recycler du polyamide contenant une résine silicone par utilisation d'un hydroxyde alcalin en présence d'agitation et de température et la neutralisation par un acide. Dans les brevets US6911546 et US6916936 la dépolymérisation du coating s'effectue en présence d'un réactif nucléophile et d'un carbène. Ce procédé a pour effet de dépolymériser l'un des constituants. La demande WO2007/009856 décrit un procédé d'élimination du silicone du tissu d'airbag par utilisation combinée d'une solution d'hydroxyde alcalin en présence d'ammonium quaternaire. Dans la demande WO2008/032052 il est proposé de traiter des déchets d'air-bags ou recycler des polyamides par l'utilisation combinée de solution d'hydroxyde alcalin en présence de surfactant et d'alcool à haute température. Les demandes WO2007135140 et WO2008043764 concernent la dépolymérisation de l'enduction par utilisation de catalyseur de transfert de phase en milieu basique ou de carbène.

Toutefois ces procédés chimiques ne conduisent pas à une parfaite séparation du polyamide d'une part et de l'enduction de silicone d'autre part. Il existe ainsi un besoin de mettre au point un procédé simple à mettre en oeuvre permettant un recyclage optimal, notamment en terme de rendement, des textiles techniques, sans notamment altérer négativement ou dégrader la matrice thermoplastique.

Il existe ainsi un besoin de valoriser ces textiles techniques notamment les air-bags constitués de polyamide enduit de silicone, d'origine post-industriels ou fin de vie pour la fabrication de formulations thermoplastiques recyclées présentant des propriétés proches de celles des formulations thermoplastiques de premiers choix standards.

### INVENTION

Il vient d'être mis en évidence que le recyclage des textiles techniques, tels que les résidus de coussins gonflables de sécurité, pouvait être optimal en procédant d'abord à la fabrication de particules micrométriques à partir de ces résidus, leur traitement pour supprimer le revêtement dans un milieu particulier adéquat présentant une masse volumique contrôlée et ensuite une séparation par la force centrifuge de la matière thermoplastique d'intérêt. La matière thermoplastique obtenue peut ensuite être utilisée pour la réalisation de granulés et/ou d'articles thermoplastiques.

La présente invention a ainsi pour objet un procédé de traitement de textiles techniques à base de fibres thermoplastiques comprenant un revêtement selon la revendication 1. On entend au sens de l'invention par textiles techniques des articles tissés, non tissés, tressés ou tricotés à base de fibres thermoplastiques.

Les fibres thermoplastiques sont généralement des fibres à base de polyamide, de polyoléfine, de polyester et/ou de polyuréthane par exemple. Le revêtement est généralement à base de polychlorure de vinyle, polyuréthanne, acrylique, élastomères et/ou silicone par exemple.

Le revêtement sur les fibres thermoplastiques des textiles techniques peut notamment être obtenu par enduction, complexage, imprégnation ou adhérisation. Dans le cas de l'enduction, le revêtement est généralement appliqué à l'état liquide et est suivie d'un séchage et éventuellement d'une réticulation. Le complexage se réalise par contre collage ou laminage sur un support textile. L'imprégnation peut être effectuée par des procédés en solution, en voie fondue, poudrage, hybridation ou transfert. L'adhérisation est un traitement spécifique des fils ou textiles destinés au renfort de caoutchouc. Afin d'obtenir une adhésion entre les fibres et l'élastomère après vulcanisation, il est nécessaire de créer un pontage chimique par un traitement qui fixera sur la fibre un composant réactif avec la formulation de caoutchouc.

L'enduction peut être réalisée sur les surfaces textiles par enduction directe, enduction à rouleaux ou à racle, enduction par transfert, par contre collage ou assemblage, par moussage, ou par enduction adhésive par exemple.

On entend au sens de l'invention par résidus de textiles techniques des déchets de production tels que des coupes ou chutes, notamment générés aux étapes d'application de revêtement ou de découpe, ou des produits hors spécifications qui ne sont pas commercialisables, ou encore des articles ou morceaux d'articles en fin de vie. A titre d'exemple, les résidus de coussins gonflables de sécurité comprennent généralement un sac, ou un morceau de sac, à base de polyamide, de polyester, de polypropylène, de polychlorure de vinyle, de polytétraméthylène adipamide, ou de polyuréthane, par exemple. Ces articles sont généralement sous forme de tissés de fibres, sur une ou plusieurs couches, et comprennent généralement un revêtement à base de silicone, de polychlorure de vinyle, de polyuréthane, de polyacrylate, de polymères élastomériques tels que des caoutchoucs, polyoléfines, élastomères fluorés, EPDM ou des caoutchoucs à base de polychloroprène.

On préfère notamment utiliser des résidus de coussins gonflables de sécurité à base de polyamide. On préfère particulièrement utiliser des résidus à base de polyamide comprenant un revêtement à base de silicone.

Comme type de polyamide, on peut citer, par exemple, les polyamides semi-cristallins ou amorphes, tels que les polyamides aliphatiques ou semi-aromatiques. On peut notamment citer les (co)polyamides 6 ; 6.6 ; 4.6 ; 6.10 ; 6.12 ; 11, 12, et/ou mélanges, tels que les polyamides 6/6.6.

Les textiles techniques, résidus de textiles techniques et notamment résidus de coussins gonflables de sécurité, tels que les coussins ou restes de coussins ou coupes ou chutes de coussins, sont généralement coupés ou broyés puis mis sous forme de particules, comme de la poudre par exemple.

Le mélange explicité précédemment peut notamment être obtenu selon des procédés usuels et connus notamment dans le domaine de l'industrie papetière, comme par exemple la micronisation, le frottement mécanique, ou l'utilisation d'un défibreur.

On peut par exemple effectuer une micronisation par couteaux, une micronisation par gaz comprimé, une micronisation par l'action cisaillant de rotor/stator ou encore un micronisation effectuée entre les éléments profilés de broyage d'un disque de micronisation fixe et d'un disque de micronisation rotatif. Selon l'invention, on obtient le mélange de particules de l'étape a) par broyage puis micronisation.

On peut par exemple procéder à une micronisation des résidus, généralement préalablement broyés, par micronisation, notamment dans un broyeur à couteaux ou disques équipé d'une grille. Cette grille peut présenter une maille comprise entre 50 et 800 µm. Selon un tel procédé, on observe généralement deux types de particules après micronisation : des particules sphériques ou quasi sphériques et des particules fibreuses.

Les particules après micronisation selon l'invention comprennent des particules fibreuses thermoplastiques et des particules sphériques ou sensiblement sphériques. Les particules du matériau de revêtement ont avantageusement un diamètre moyen compris entre 50 et 300 µm. Les particules fibreuses thermoplastiques ont avantageusement une longueur comprise entre 200 et 1100 µm.

A ce stade du procédé, les particules fibreuses thermoplastiques sont encore partiellement revêtues par le matériau de revêtement.

La taille de ces particules sphériques de revêtement peut être mesurée par microscopie optique, ou microscopie électronique à balayage.

Les particules présentent en outre préférentiellement un diamètre médian D50 compris entre 50 et 500 µm, plus préférentiellement entre 100 et 350 µm. La distribution granulométrique des objets peut être obtenue par mesure de diffraction laser, notamment sur un granulomètre de chez Malvern, par exemple en utilisant le module en voie humide. On assimile toutes les particules à des sphères sans prendre en compte leur facteur de forme dans ce calcul. La maille D50 est la dimension telle que 50% des particules sont plus petites que cette dimension et 50% des particules sont plus grandes que cette dimension. L'analyse granulométrique par diffraction laser peut être réalisée selon les indications de la norme AFNOR ISO 13320-1. A titre d'exemple on peut mesurer la distribution granulométrique en suivant le protocole suivant : on utilise un granulomètre à diffraction de la lumière Malvern Mastersizer 2000 équipé du module hydro S, après mise en suspension de l'échantillon dans de l'éthanol. Les conditions de mesure sont les suivantes : agitation dans la cuve du granulomètre : 1400 tr/min ; modèle optique : Fraunhofer ; gamme de mesure : 100 nm à 3000 µm.

On procède alors à la mise en suspension du mélange de particules obtenues à l'étape a) avec un milieu permettant la séparation des particules de revêtement et des particules fibreuses thermoplastiques ; ledit milieu présente une masse volumique comprise entre la masse volumique des particules fibreuses thermoplastiques et la masse volumique du matériau de revêtement.

En particulier, ledit milieu présente une masse volumique comprise dans une gamme allant de 0,95 x ((µ_{fth} + µₘᵣₑᵥ)/2) à 1,05 x ((µ_{fth} + µₘᵣₑᵥ)/2) où
µ_{fth} représente la masse volumique des particules fibreuses thermoplastiques et µₘᵣₑᵥ représente la masse volumique du matériau de revêtement.

Plus particulièrement, ledit milieu présente une masse volumique comprise dans une gamme allant de 0,98 x ((µ_{fth} + µₘᵣₑᵥ)/2) à 1,02 x ((µ_{fth} + µₘᵣₑᵥ)/2), voire dans une gamme allant de 0,99 x ((µ_{fth} + µₘᵣₑᵥ)/2) à 1,01 x ((µ_{fth} + µₘᵣₑᵥ)/2).

Le milieu peut présenter une masse volumique comprise entre 1 et 1,5, notamment entre 1,03 et 1,5, par exemple entre 1 et 1,12, et plus particulièrement entre 1,05 et 1,12 g/cm³.

La masse volumique d'un corps pris est une grandeur physique qui caractérise la masse d'un matériau homogène par unité de volume.

Le milieu permettant la séparation du revêtement et des particules fibreuses thermoplastiques dépend essentiellement des matériaux composants les textiles techniques.

En particulier ce milieu est une solution aqueuse. Tout particulièrement cette solution est dépourvue d'alcool, notamment de type alcool en C1-C6 et/ou de type éthylène glycol, encore plus particulièrement elle est dépourvue d'autres solvant que l'eau.

Selon une variante ce milieu est dépourvu de tensioactif. Encore plus particulièrement ledit milieu consiste essentiellement en de l'eau et éventuellement une base ou un acide, en particulier une base. Selon l'invention, on utilise un milieu alcalin, présentant un pH supérieur ou égal à 10, plus préférentiellement un pH de 14, notamment pour procéder à la séparation des revêtements silicones sur des fibres thermoplastiques. Divers procédés chimiques alcalins sont connus pour dissocier la matière polyamide du matériau constituant le revêtement. On peut notamment citer la demande de brevet WO2007/135140 à cet effet. Ledit milieu peut notamment être une solution aqueuse comprenant un hydroxyde de métal alcalin ou alcalino-terreux. Comme hydroxyde de métal alcalin, on peut notamment citer LiOH, NaOH et KOH.

Pour les autres revêtements, on choisira des solutions alcalines ou acides ou des solutions de sels organiques ou métalliques, dont les concentrations seront ajustées pour que la masse volumique de la solution soit comprise entre celles des particules fibreuses thermoplastiques et du revêtement.

La mise en suspension peut être faite par mélange et agitation par exemple. La suspension peut présenter un ratio solide/liquide allant de 10 à 50%, notamment de 15 à 40% par exemple de 20 à 30%.

En particulier l'étape b) de mise en suspension est effectuée à une température allant de 10 à 80°C, tout particulièrement de 15 à 50°C, voire à température ambiante, c'est-à-dire d'environ 18 à environ 25°C. Selon une variante, cette étape est dépourvue de chauffage. Ceci présente notamment l'avantage de limiter le coût financier et énergétique de ce procédé.

Le procédé peut ainsi permettr un temps de résidence des particules en suspension dans l'étape b) bref. Ainsi, le temps de résidence de ces particules en suspension peut être inférieur à 45 minutes, notamment à 30 minutes, en particulier à 20 minutes, tout particulièrement à 10 minutes, voire être d'environ 5 minutes.

A ce stade du procédé, les particules fibreuses thermoplastiques sont pratiquement toutes désolidarisées du matériau de revêtement qui se trouve sous forme sphérique ou essentiellement sphérique dans le milieu.

La séparation par la force centrifuge des particules fibreuses thermoplastiques d'une part et des particules de matériau de revêtement d'une autre part peut être réalisée de diverses manières par la force centrifuge.

On préfère notamment utiliser une technique de décantation centrifuge ou centrifugation basée sur la force centrifuge créée par la mise en rotation de la suspension, notamment à grande vitesse, dans une machine tournante telle qu'une centrifugeuse, une centrifugeuse à bol, une centrifugeuse à bol et vis, ou un séparateur à assiettes.

On préfère notamment utiliser des décanteurs centrifuges à axe horizontal, appelé DCAH, notamment permettant de séparer des particules solides du liquide porteur par décantation centrifuge. La suspension pénètre dans un bol cylindro-conique dans lequel est positionné un convoyeur à vis. Le liquide forme un anneau liquide dans le bol alors que les solides par l'effet centrifuge sont plaqués sur la surface du bol. Le centrat est alors évacué par débordement au niveau de la partie cylindrique de la machine alors que les solides déposés sur le bol sont convoyés par la vis en direction de la partie cylindrique de la machine où ils sont évacués.

On peut notamment utiliser à cet effet un décanteur centrifuge tel que mentionné dans la demande WO9740941. On peut aussi citer les centrifugeuses de Flottweg tels que le Tricanter®, le Sedicanter® et le Sorticanter®.

La suspension à séparer est alors introduite dans le décanteur par une canne d'alimentation axiale. Le produit est progressivement accéléré dans la chambre de distribution avant d'être introduit dans le bol par des orifices appropriés. Le bol, de forme cylindro-conique, tourne à une vitesse optimisée. La suspension tourne avec le bol à la vitesse de fonctionnement et forme une couche concentrique sur la paroi interne du bol. Les particules solides contenues dans la suspension sont plaquées contre la paroi du bol sous l'effet du champ centrifuge. Le diamètre, la longueur de la section cylindrique et l'angle du cône sont définis selon les exigences spécifiques de l'application. La vis convoyeuse tourne à une vitesse différente de celle du bol, ce qui lui permet de convoyer les particules solides ayant décanté, vers l'extrémité conique du bol. La vitesse différentielle détermine le temps de rétention des particules solides dans le bol et par conséquent, la siccité des solides extraits. Elle peut être ajustée en marche, en vue d'optimiser la séparation. Le pas de vis et le nombre de filets font partie des principales variables de conception. Les solides séparés sont évacués à l'extrémité conique du bol dans le collecteur de sédiments puis tombent par gravité, dans la trémie d'évacuation.

On peut alors éventuellement traiter les particules fibreuses thermoplastiques récupérées à l'issue l'étape c) pour neutraliser le pH notamment après avoir utilisé un milieu alcalin à l'étape b). On peut neutraliser avec de l'eau ou un acide par exemple.

Le séchage peut être nécessaire pour éliminer ou réduire la teneur en eau ou autre liquide des particules fibreuses thermoplastiques. Les techniques de séchage peuvent être mécaniques ou thermiques. On préfère notamment l'évaporation par air chaud. La chaleur peut être transférée par convection, radiation infrarouge, conduction, micro-ondes ou haute fréquence. Des particules fibreuses thermoplastiques sont susceptibles d'être obtenues par le procédé de l'invention tel que décrit précédemment. Des particules fibreuses thermoplastiques telle qu'obtenues peuvent être utilisées pour la fabrication de compositions thermoplastiques, comprenant éventuellement des charges de renfort ou de remplissage ou autres divers additifs classiquement utilisés dans le domaine. Une composition thermoplastique peut être obtenue par mise en fusion des particules fibreuses thermoplastiques obtenues selon le procédé de l'invention. Cette composition peut comprendre au moins une charge de renfort et/ou de remplissage.

Pour améliorer les propriétés mécaniques de la composition, il peut être avantageux de lui adjoindre au moins une charge de renfort et/ou de remplissage préférentiellement choisie dans le groupe comprenant les charges fibreuses telles que les fibres de verre, les fibres de carbone et les fibres aramides, les charges minérales non fibreuses telles que les argiles, le kaolin, le mica, la wollastonite et la silice. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 20 et 50 %, par rapport au poids total de la composition.

La composition peut en outre comprendre des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agents d'amélioration de la résilience comme des élastomères éventuellement greffés, les stabilisants lumière et/ou thermique, les antioxydants, les antistatiques les, colorants, les pigments, les matifiants, les additifs d'aide au moulage ou autres additifs conventionnels.

Pour la réalisation d'une composition, ces charges et additifs peuvent être ajoutés au matériau thermoplastique par des moyens usuels adaptés à chaque charge ou additif, tels que par exemple lors de la polymérisation ou en mélange en fondu. Les charges sont préférentiellement ajoutées au thermoplastique par voie fondue, notamment lors d'une étape d'extrusion du thermoplastique, ou par voie solide dans un mélangeur mécanique ; le mélange solide pouvant ensuite être mis en fusion, par exemple par un procédé d'extrusion. On peut ainsi obtenir des granulés ou poudre à mouler destinés à la fabrication d'articles ultérieurement ou alors directement destiner à la fabrication d'articles tel que par moulage par exemple.

Les particules fibreuses thermoplastiques peuvent être mélangées à d'autres matériaux thermoplastiques, de même nature ou non.

On ajoute généralement de 0,5 à 100 % en poids, préférentiellement de 5 à 90 % en poids, plus préférentiellement de 15 à 80 % en poids, de particules fibreuses thermoplastiques par rapport au poids total de la composition.

Les compositions peuvent être utilisées comme matière première, par exemple comme matrice, notamment dans le domaine des plastiques techniques, par exemple pour la réalisation d'articles obtenus par moulage, par moulage par injection, par injection/soufflage, par extrusion ou par extrusion/soufflage, ou par filage, ou pour l'obtention de film. Les compositions peuvent être par exemple utilisées pour la fabrication par extrusion de monofilaments, filaments, fils et fibres. Les articles peuvent également être des produits semi-finis dans une grande variété de dimensions qui peuvent être usinés. Des assemblages peuvent être réalisés par soudure ou collage par exemple. Les articles réalisés par extrusion peuvent être notamment des tubes, barres, profilés, plaques, feuilles et/ou corps creux.

Les pièces moulées sont réalisées par fusion des granulés produits ci-dessus et alimentation de la composition à l'état fondu dans des dispositifs de moulage par injection. Les articles réalisés par moulage par injection peuvent être des pièces du domaine de l'automobile, du bâtiment ou de l'électricité.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Fabrication de particules

Les air-bags utilisés sont des déchets industriels, broyés en morceaux, à base de polyamide 66 et enduits sur une face de silicone réticulé. La teneur en polymère silicone est de 10 % en poids

Les air-bags sont découpés puis broyés dans un broyeur Herbold comprenant une rangée de couteaux fixe. On obtient ainsi des résidus de formes carrées de 2 cm x 2 cm. Ces résidus sont alors micronisés par un microniseur Herbold avec une rangée de couteaux fixes et une rangée de couteaux mobiles et une grille de 500 µm. Des résidus non micronisés seront également utilisés à titre de référence.

Les particules fibreuses thermoplastiques sont alors présentes sous forme de fibres de longueur comprises entre 0,8 et 1,5 mm et les particules du matériau d'enduction sous forme de particules quasi-sphériques présentant un diamètre moyen de 200 µm. La taille de ces particules est mesurée par microscopie optique.

Les particules présentent un diamètre médian D50 de 108 µm.

### Mise en suspension

Les particules sont mises en suspension dans un liquide ayant une masse volumique de 1,1 g/cm³ ; soit le liquide 1 comprenant de la soude et présentant un pH de 14 ; soit le liquide 2 comprenant du sulfate de magnésium et présentant un pH de l'ordre de 7 à titre de référence. Le ratio solide/liquide est ajusté entre 20 et 30%.

### Séparation par la force centrifuge

Les suspensions sont alors alimentées dans un Sorticanter® de Flottweg utilisé pour la séparation des particules de polyamide et des particules d'enduction avec les paramètres suivants :
- Vitesse de rotation de la vis : 3000 tours/minute
- Vitesse du bol de 1100 tours/minute
- Température : 25°C

Les fractions solides contenues dans les deux flux sortants sont mesurées et les composés analysés. Les résultats sont mentionnés au tableau 1. Les teneurs en solide sont déterminées par prélèvement des deux flux sortants et séchage à 80°C dans une étuve à pression atmosphérique pendant au minimum 1 nuit. Par différence de pesée on définit la teneur en solide dans chacun des flux de sortie.

**Tableau 1**

| | **Matière** | **Temps de résidence** | **% solide dans la phase légère** | **% solide dans la phase lourde** | **Rendement (%)** |
|---|---|---|---|---|---|
| C1 | Tissus broyés mais non micronisés traités avec un milieu alcalin | > 2 heures | 69,5 | 73,6 | 56 |
| C2 | Tissus micronisés traités par un milieu non alcalin | 30 minutes | 76,2 | 70,8 * | 45,3 |
| C3 | Tissus broyés mais non micronisés traités par un milieu non alcalin | 1 heure | 86 | 75 * | < 5 |
| 1 | Tissus micronisés traités avec un milieu alcalin | < 5 minutes | 90,1 | 67 | 98,7 |

| | | | | | |
|---|---|---|---|---|---|
| * : forte présence de particules d'enduction | | | | | |

Le rendement est calculé en effectuant une analyse élémentaire du silicium avant le traitement sur des résidus broyés et après le traitement sur les fibres constituant la phase solide lourde .

Il apparait ainsi que le procédé selon la présente invention permet l'élimination quasi complète de l'enduction silicone du textile pour des temps de séjour très court, avec un milieu de séparation dépourvu d'additifs tels que des tensioactifs ou des alcools, sans chauffage dudit milieu, et un rendement très élevé.

Les particules fibreuses sont ensuite rincées à l'eau pour retrouver un pH neutre dans un essoreuse et ensuite séchées dans un séchoir à tunnel par de l'air chaud.

### Fabrication de nouvelles formulations

Les particules fibreuses obtenues dans les divers exemples précédents sont ensuite utilisées pour réaliser des formulations chargées comprenant 30 % en poids de fibres de verre standards de type E du fournisseur Vetrotex. Des additifs stabilisants thermiques et anti-oxydants ont également été introduits dans les formulations.

A titre de référence dans l'essai C4 un polyamide vierge de type 66 le Stabamid™ 27AE1 de Rhodia d'IV 138ml/g mesuré par la méthode 3 AN 22 022, et de température de fusion de 265°C est utilisée pour réalisée une formulation polyamide chargé par 30 % en poids des mêmes fibres de verre.

Les expérimentations ont été réalisées sur une extrudeuse bi-vis de laboratoire Leistritz dont les principales caractéristiques sont les suivantes : diamètre vis D de 34 mm, écartement d'axe de 30 mm et longueur de 35 mm. La température du fourreau a été maintenue constante à 285°C sur toute la longueur de la vis. Le profil de vis a été conçu de telle façon qu'un dégazage soit effectué en queue d'extrudeuse. Pour chacun des essais la vitesse de rotation de la vis est de 290 rpm et le débit de l'extrudeuse est de 10kg/h. Des granulés sont obtenus et utilisés pour réaliser des éprouvettes par moulage par injection.

Les performances mécaniques sont reportées dans le tableau 2 ci-après. On observe que pour un même déchet sous forme de poudre lavée ou non, les performances mécaniques sont accrues après lavage et du même niveau que du compound 1^{er} choix, ceci grâce à l'efficacité de la séparation.

**Tableau 2**

| **Matière** | **Résilience (kJ/m²)** | **Module Tension (Mpa)** | **Contrainte en traction à la rupture (Mpa)** |
|---|---|---|---|
| Particules fibreuses issues de l'essai C1 | 74 | 9900 | 158 |
| Particules fibreuses issues de l'essai C2 | 62 | 9500 | 143 |
| Particules fibreuses issues de l'essai C3 | 56 | 9300 | 125 |
| Référence PA66 C4 | 82 | 10300 | 184 |
| Particules fibreuses issues de l'essai 1 de l'invention | 81 | 10600 | 183 |

La Résilience est mesurée selon la norme ISO1791eU. Le Module de Tension et la Contrainte en traction à la rupture sont mesurés selon la norme ISO527/1.

Il apparait ainsi que le procédé de traitement selon la présente invention permet la réalisation de formulations polyamides présentant des propriétés mécaniques tout à fait comparables aux propriétés d'une formulation classique utilisant une matrice polyamide non recyclée ; ce qui n'est pas le cas avec les autres traitements selon l'art antérieur.

## Revendications

1. Procédé de traitement de textiles techniques à base de fibres thermoplastiques comprenant un revêtement et comprenant au moins les étapes suivantes :
a) traitement desdits textiles par broyage puis micronisation de manière à obtenir un mélange comprenant au moins :
- des particules fibreuses thermoplastiques partiellement revêtues par le matériau de revêtement, et
- des particules sphériques ou quasi-sphériques du matériau de revêtement présentant un diamètre moyen compris entre 15 et 750 µm ;
b) mise en suspension du mélange obtenu à l'étape a) avec un milieu permettant la séparation du matériau de revêtement et des particules fibreuses thermoplastiques, **caractérisé en ce que** le milieu de l'étape b) est un milieu alcalin présentant un pH supérieur ou égal à 10 ; ledit milieu présentant une masse volumique comprise entre la masse volumique des particules fibreuses thermoplastiques et la masse volumique du matériau de revêtement;
c) séparation du matériau de revêtement et des particules fibreuses thermoplastiques par la force centrifuge ;
d) éventuellement traitement des particules fibreuses thermoplastiques récupérés à l'étape c) pour neutraliser le pH ;
e) séchage des particules fibreuses thermoplastiques.

2. Procédé selon la revendication 1, **caractérisé en ce que** les fibres thermoplastiques sont des fibres à base de polyamide, de polyoléfine, de polyester et/ou de polyuréthane.

3. Procédé selon la revendication 1 ou 2, **caractérisé en ce que** le revêtement est à base de polychlorure de vinyle, polyuréthanne, acrylique, élastomères et/ou silicone.

4. Procédé selon l'une quelconque des revendications 1 à 3, **caractérisé en ce que** les textiles techniques sont des résidus de coussins gonflables de sécurité.

5. Procédé selon l'une quelconque des revendications 1 à 4, **caractérisé en ce que** la séparation de l'étape c) est mise en oeuvre dans un décanteur centrifuge à axe horizontal.

## Patentansprüche

1. Verfahren zur Behandlung von technischen Textilien auf der Basis thermoplastischer Fasern mit einer Beschichtung, das mindestens folgende Schritte umfasst:
a) Behandeln der Textilien durch Mahlen und anschließend Mikronisieren zum Erhalten einer Mischung, die mindestens Folgendes umfasst:
- thermoplastische Faserpartikel, die teilweise mit dem Beschichtungsmaterial beschichtet sind, und
- kugelförmige oder quasi kugelförmige Partikel des Beschichtungsmaterials mit einem mittleren Durchmesser zwischen 15 und 750 µm;
b) Suspendieren der in Schritt a) erhaltenen Mischung mit einem Medium, das die Trennung des Beschichtungsmaterials und der thermoplastischen Faserpartikel ermöglicht, **dadurch gekennzeichnet, dass** Medium von Schritt b) ein alkalisches Medium mit einem pH-Wert größer gleich 10 ist; wobei das Medium eine Dichte zwischen der Dichte der thermoplastischen Faserpartikel und der Dichte des Beschichtungsmaterials aufweist;
c) Trennen des Beschichtungsmaterials und der thermoplastischen Faserpartikel durch Fliehkraft;
d) gegebenenfalls Behandeln der in Schritt c) gewonnenen thermoplastischen Faserpartikel zum Neutralisieren des pH-Werts;
e) Trocknen der thermoplastischen Faserpartikel.

2. Verfahren nach Anspruch 1, **dadurch gekennzeichnet, dass** die thermoplastischen Fasern Fasern auf Basis von Polyamid, Polyolefin, Polyester und/oder Polyurethan sind.

3. Verfahren nach Anspruch 1 oder 2, **dadurch gekennzeichnet, dass** die Beschichtung auf Polyvinylchlorid, Polyurethan, Acryl, Elastomeren und/oder Silikon basiert.

4. Verfahren nach einem der Ansprüche 1 bis 3, **dadurch gekennzeichnet, dass** die technischen Textilien Reste von Airbags sind.

5. Verfahren nach einem der Ansprüche 1 bis 4, **dadurch gekennzeichnet, dass** die Trennung von Schritt c) in einer Horizontalachsen-Absetzzentrifuge erfolgt.

## Claims

1. Process for the treatment of technical textiles based on thermoplastic fibers comprising a coating, which comprises at least the following stages:
a) treating said textiles by grinding and then micronizing; so as to obtain a mixture comprising at least:
- fibrous thermoplastic particles partially coated by the coating material, and
- spherical or quasispherical particles of the coating material exhibiting a mean diameter of between 15 and 750 µm;
b) suspending the mixture obtained in stage a) with a medium which makes possible the separation of the coating material and fibrous thermoplastic particles, **characterized in that** the medium of stage b) is an alkaline medium exhibiting a pH of greater than or equal to 10; said medium exhibiting a density between the density of the fibrous thermoplastic particles and the density of the coating material;
c) separating the coating material and the fibrous thermoplastic particles by centrifugal force;
d) optionally treating the fibrous thermoplastic particles recovered in stage c) in order to neutralise the pH;
e) drying the fibrous thermoplastic particles.

2. Process according to Claim 1, **characterized in that** the thermoplastic fibers are fibers based on polyamide, polyolefin, polyester and/or polyurethane.

3. Process according to Claim 1 or 2, **characterized in that** the coating is based on polyvinyl chloride, polyurethane, acrylic, elastomers and/or silicone.

4. Process according to any one of Claims 1 to 3, **characterized in that** the technical textiles are airbag residues.

5. Process according to any one of Claims 1 to 4, **characterized in that** the separation of stage c) is carried out in a horizontal-axis centrifugal decanter.
